# EUROPEAN PATENT APPLICATION

(11) **EP 4 730 460 A1**
(43) Date of publication of application: **22.04.2026**
(21) Application number: 25790510.9
(22) Date of filing: 13.01.2025
(51) Int. Cl.: H01M 10/04, H01M 50/256, B65D 25/10, H01M 50/249

(54) **TRAY FOR ACTIVATING BATTERY CELL AND BATTERY CELL PRODUCED USING SAME, AND BATTERY PACK AND VEHICLE COMPRISING BATTERY CELLS**

(30) Priority: 19.04.2024 KR 20240052875
(71) Applicant: LG Energy Solution, Ltd., Seoul 07335 (KR)
(72) Inventor: SA, Kwang-Jin, Daejeon 34122 (KR); KIM, Jee-Ho, Daejeon 34122 (KR)
(74) Representative: Goddar, Heinz J.
(86) International application number: PCT/KR2025/000706
(87) International publication number: WO 2025/220849

(57) **Abstract**

Disclosed are a battery cell activation tray and a battery cell produced using the same, and a battery pack and a vehicle including the battery cell. A battery cell activation tray according to an embodiment of the present disclosure is a battery cell activation tray where battery cells are seated and an activation process is performed, and it includes a pair of inner frames each supporting both ends of the battery cell; an outer frame to which the inner frames are coupled; and a pressure member disposed between the pair of inner frames and pressurizing a center of the battery cell.

## Description

### TECHNICAL FIELD

This application is based on and claims priority from Korean Patent Application No. 10-2024-0052875, filed on April 19, 2024, with the Korean Intellectual Property Office, the disclosure of which is incorporated herein in its entirety by reference.

The present disclosure relates to a battery cell activation tray and a battery cell produced using the same, and a battery pack and a vehicle including the battery cell, and more specifically, to a battery cell activation tray capable of improving impregnation of an electrolyte and a battery cell produced using the same, and a battery pack and a vehicle including the battery cell.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit secondary battery cell is about 2.5 V to 4.5 V.

Therefore, when a higher output voltage is required, a plurality of battery cells may be connected in series to configure a battery module or a battery pack. Additionally, depending on the demanded charging and discharging capacity, a plurality of battery cells may also be connected in parallel to configure a battery module or a battery pack. Thus, the number and electrical connection type of battery cells included in the battery module or the battery pack may be variously set depending on at least one of the required output voltage and the demanded charging and discharging capacity.

Meanwhile, as types of secondary battery cells, pouch-type, cylindrical, and prismatic battery cells are known. The process of assembling battery cells includes a process of accommodating an electrode assembly including a positive electrode, a negative electrode, and a separator interposed between the positive electrode and the negative electrode in a case and then injecting an electrolyte into the case to be impregnated with the electrolyte.

And, after impregnating the case with the electrolyte, the battery cell is activated. For example, the activation process of the battery cell is performed by applying a current to the battery cell using a charging and discharging device provided with charging and discharging pins.

Here, the battery cell is seated on an activation tray to activate the battery cell.

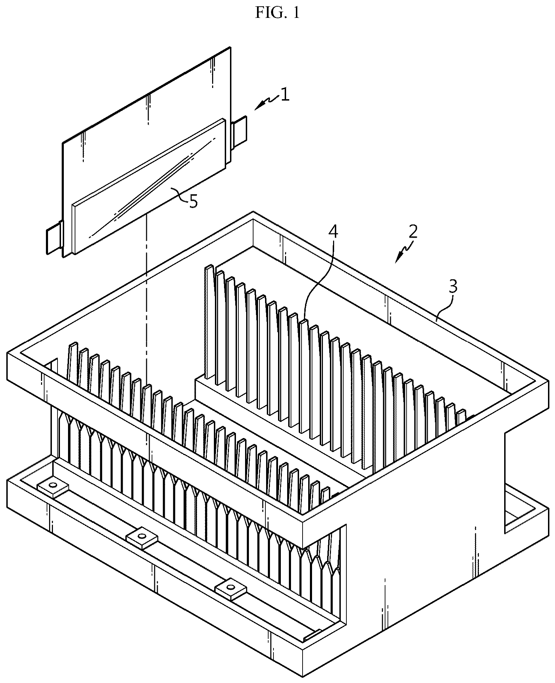

FIG. 1 is a perspective view of a conventional battery cell activation tray.

Referring to FIG. 1, an activation tray 2 of a conventional battery cell 1 includes a body 3 and a pair of supports 4 that are inserted into the body 3 and support both ends of the battery cell 1, respectively.

However, the conventional activation tray 2 supports only both ends of the battery cell 1 with the pair of supports 4, and may not support or pressurize a center 5 of the battery cell 1. Therefore, the electrolyte is not impregnated or is impregnated insufficiently in any part of the center 5 of the battery cell 1, thereby causing problems of lithium precipitation from the final battery cell 1 and resultant defects in the battery cell 1.

### DISCLOSURE

### Technical Problem

The present disclosure is designed to solve the above-described problems, and therefore the present disclosure is directed to providing a battery cell activation tray capable of improving impregnation of an electrolyte and a battery cell produced using the same, and a battery pack and a vehicle including the battery cell.

Additionally, the present disclosure is directed to providing a battery cell activation tray capable of preventing lithium precipitation in the final battery cell and thus preventing defects in the battery cell and a battery cell produced using the same, and a battery pack and a vehicle including the battery cell.

Additionally, the present disclosure is directed to providing a battery cell activation tray that may improve impregnation of an electrolyte by simply adding a pressure member to an existing battery cell activation tray and thus is advantageous in terms of cost, and a battery cell produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a battery cell activation tray where battery cells are seated and an activation process is performed, the battery cell activation tray including a pair of inner frames each supporting both ends of the battery cell; an outer frame to which the inner frames are coupled; and a pressure member disposed between the pair of inner frames and pressurizing a center of the battery cell.

In an embodiment, the pressure member may include a bottom portion coupled to the outer frame; and a plurality of pressure portions coupled to the bottom portion.

In an embodiment, the plurality of pressure portions may be spaced apart at preset intervals, and the battery cell may be inserted into the interval between the plurality of pressure portions.

In an embodiment, the battery cell may be inserted into the interval between the plurality of pressure portions in a force-fitting manner.

In an embodiment, the pressure portion may be formed in a planar plate shape.

In an embodiment, the plurality of pressure portions may be elastic.

In an embodiment, the plurality of pressure portions may be formed in the form of a leaf spring.

In an embodiment, a plurality of protrusions may be formed on at least one of the plurality of pressure portions.

In an embodiment, the plurality of pressure portions may be configured to be movable in a direction of being closer to or away from each other to allow the interval between the plurality of pressure portions to be adjusted.

In an embodiment, rounded parts may be formed in the plurality of pressure portions to facilitate the insertion of the battery cell.

In an embodiment, a rib portion for being fixed to the outer frame by a fastening member may be formed on the bottom portion.

In an embodiment, a plurality of through holes may be formed in the bottom portion.

Meanwhile, according to another aspect of the present disclosure, there may be provided a battery cell produced using the battery cell activation tray described above, there may also be provided a battery pack including at least one battery cell described above, and there may also be provided a vehicle including at least one battery cell described above.

### Advantageous Effects

The embodiments of the present disclosure have an effect of improving the impregnation of the electrolyte.

Additionally, there is an effect of preventing lithium precipitation in the final battery cell and thus preventing defects in the battery cell.

Additionally, since it is possible to improve the impregnation of the electrolyte by simply adding the pressure member to the existing battery cell activation tray, there is an advantageous effect in terms of cost.

However, the effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view of a conventional battery cell activation tray.
FIG. 2 is a perspective view of a battery cell activation tray according to an embodiment of the present disclosure, and shows that a battery cell is separated from the activation tray.
FIG. 3 shows that the battery cell is seated on the activation tray in FIG. 2.
FIG. 4 is an exploded perspective view of a battery cell activation tray according to an embodiment of the present disclosure.
FIG. 5 is a view partially showing a state in which a battery cell is seated on an inner frame and a pressure member in a battery cell activation tray according to an embodiment of the present disclosure.
FIG. 6 is a cross-sectional view taken along line A-A' of FIG. 5.
FIG. 7 is a view showing a modified embodiment of FIG. 6.
FIG. 8 is a top view showing a state in which a battery cell is seated on a pressure member in a battery cell activation tray according to an embodiment of the present disclosure.
FIG. 9 is a view of a modified embodiment for an embodiment of the present disclosure, showing a state in which an interval between a plurality of pressure portions of the pressure member is adjusted.
FIG. 10 is a view of another modified embodiment for an embodiment of the present disclosure, showing a state in which a plurality of protrusions are formed on the pressure portions of the pressure member.
FIG. 11 is a view of still another modified embodiment for an embodiment of the present disclosure.
FIG. 12 is a cross-sectional view taken along line B-B' of FIG. 11, showing a process in which a battery cell is inserted into a plurality of elastic pressure portions.
FIG. 13 is a view schematically showing the configuration of a battery pack including battery cells produced using a battery cell activation tray according to each embodiment of the present disclosure.
FIG. 14 is a view for describing a vehicle including a battery pack according to each embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

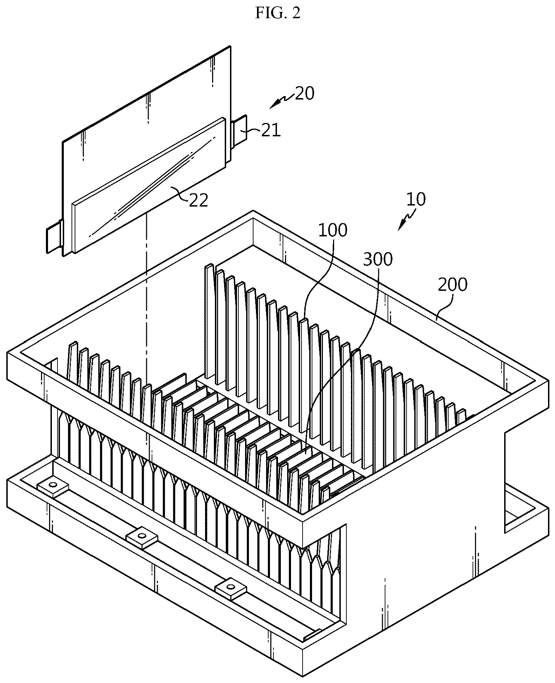

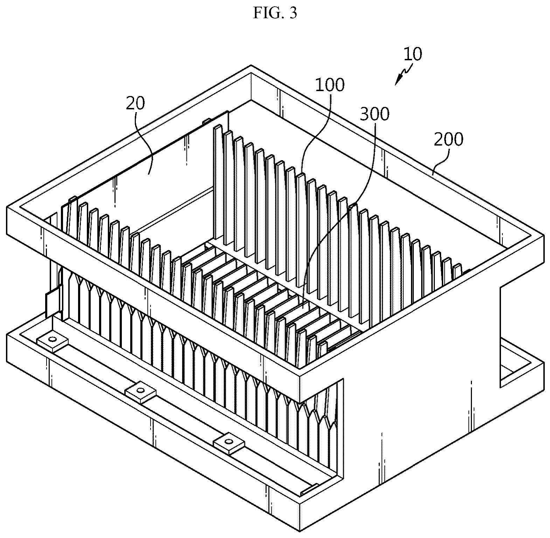

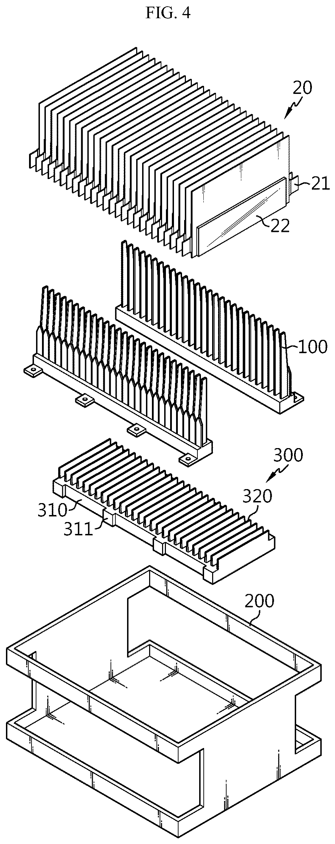

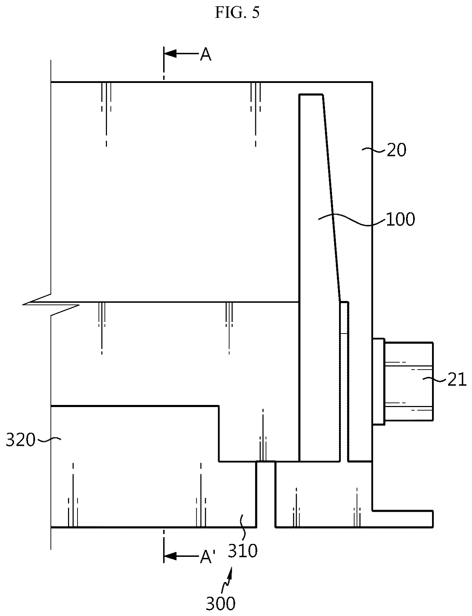

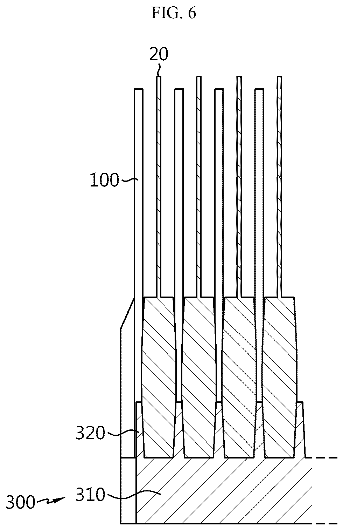

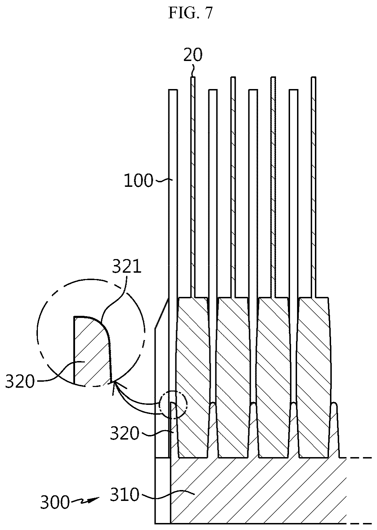

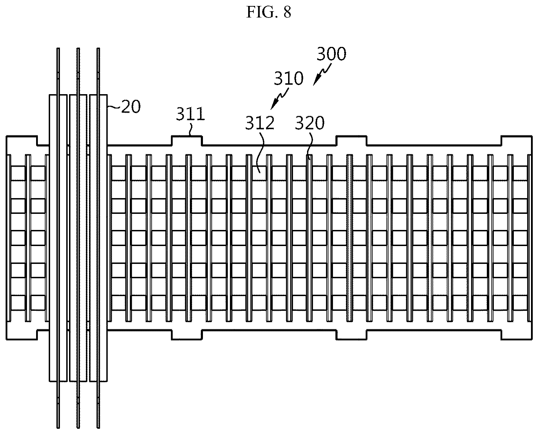

FIG. 2 is a perspective view of a battery cell activation tray according to an embodiment of the present disclosure, and shows that a battery cell is separated from the activation tray, FIG. 3 shows that the battery cell is seated on the activation tray in FIG. 2, FIG. 4 is an exploded perspective view of a battery cell activation tray according to an embodiment of the present disclosure, FIG. 5 is a view partially showing a state in which a battery cell is seated on an inner frame and a pressure member in a battery cell activation tray according to an embodiment of the present disclosure, FIG. 6 is a cross-sectional view taken along line A-A' of FIG. 5, FIG. 7 is a view showing a modified embodiment of FIG. 6, and FIG. 8 is a top view showing a state in which a battery cell is seated on a pressure member in a battery cell activation tray according to an embodiment of the present disclosure.

The battery cell activation tray 10 according to an embodiment of the present disclosure is a tray in which a battery cell 20 is seated, impregnated with an electrolyte, and subjected to an activation process.

As described above, in the manufacturing process of the battery cell 20, the electrolyte is injected through one side of the case of the battery cell 20 in which the electrode assembly is accommodated, and then the cell case is sealed. Then, the battery cell 20 into which the electrolyte is injected is seated on the battery cell activation tray 10, and impregnation with the electrolyte is performed inside the cell case.

The battery cell activation tray 10 according to an embodiment of the present disclosure may improve the impregnation of the electrolyte by pressurizing a center 22 of the battery cell 20 seated on the activation tray. Hereinafter, this will be described in detail.

Referring to FIGS. 2 to 4, the battery cell activation tray 10 according to an embodiment of the present disclosure includes a pair of inner frames 100, an outer frame 200, and a pressure member 300.

The inner frames 100 are configured in a pair to support both ends of the battery cell 20, respectively. And, the inner frames 100 are coupled to the outer frame 200.

Here, the battery cell 20 may be configured in various ways, and may be a pouch-type battery cell 20, but is not limited thereto.

The battery cell 20 may have a structure in which a plurality of unit cells arranged in the order of positive electrode plate-separator-negative electrode plate or a plurality of bi-cells arranged in the order of positive electrode plate-separator-negative electrode plate-separator-positive electrode plate-separator-negative electrode plate are stacked to match the battery capacity.

The battery cell 20 may be provided with an electrode lead 21. The electrode lead 21 is a type of terminal that is exposed to the outside and connected to an external device, and may be made of a conductive material. The electrode lead 21 may include a positive electrode lead and a negative electrode lead.

The positive electrode lead and the negative electrode lead may be disposed in opposite directions with respect to the longitudinal direction of the battery cell 20, or the positive electrode lead and the negative electrode lead may be positioned in the same direction with respect to the longitudinal direction of the battery cell 20.

Referring to FIGS. 3 and 5, for example, the inner frames 100 may support the battery cell 20 at a position close to the electrode lead 21 of the battery cell 20.

The inner frames 100 are coupled to the outer frame 200. And, a pressure member 300 may be coupled thereto. That is, the outer frame 200 is configured to support the inner frames 100 and the pressure member 300. However, if necessary, the pressure member 300 may be configured to be coupled to the inner frames 100 rather than the outer frame 200.

Referring to FIG. 2, the pressure member 300 is disposed between the pair of inner frames 100. And, referring to FIGS. 3 and 5, the pressure member 300 is configured to pressurize the center 22 of the battery cell 20.

Here, the center 22 of the battery cell 20 is not meant to be only the exact center of the battery cell 20 based on the horizontal direction, and should be understood to correspond to the center even when it includes both the exact center of the battery cell 20 and non-center portions thereof.

In the case of a pouch-type battery cell, when only both ends of the battery cell are supported by the pair of inner frames 100, the electrolyte sags down from the center 22 of the battery cell 20, and thus the electrolyte may not move to the upper side of the center 22, thereby causing a part that is not impregnated in the center 22 of the battery cell 20.

In this way, when impregnation is not performed in the center 22 of the battery cell 20 or impregnation is insufficient, there are problems of lithium precipitation in the final battery cell 20 and defects in the battery cell 20, as described above.

To solve this problem, the pressure member 300 pressurizes the center 22 of the battery cell 20 to allow the electrolyte to move to the upper side of the battery cell 20, thereby ensuring that sufficient impregnation is performed in the center 22 of the battery cell 20.

Referring to FIGS. 5 and 6, the pressure member 300 may include a bottom portion 310 and a plurality of pressure portions 320. The bottom portion 310 is coupled to the outer frame 200. There are various ways in which the bottom portion 310 is coupled to the outer frame 200. For example, a rib portion 311 (see FIG. 8) may be formed on the bottom portion 310, and various types of fastening members, for example, bolts, may be fixed to the outer frame 200 through the rib portion 311.

In this way, by coupling the pressure member 300 to the outer frame 200 through the fastening member, electrolyte impregnation may be improved by adding the pressure member 300 to an existing battery cell activation tray.

That is, by forming a fastening hole through which the fastening member may be coupled to the existing battery cell activation tray, the pressure member 300 provided in the battery cell activation tray 10 according to an embodiment of the present disclosure may be coupled, so that there is no need to separately manufacture the entire battery cell activation tray, which has an advantageous effect in terms of cost.

Referring to FIG. 8, a plurality of through holes 312 may be formed in the bottom portion 310. When the through holes 312 are formed in the bottom portion 310, the overall weight may be reduced, and there is an effect of reducing the manufacturing cost.

The pressure portion 320 are provided in plurality, and are coupled to the bottom portion 310 as shown in FIGS. 4 and 5. Here, referring to FIGS. 6 and 8, the plurality of pressure portions 320 are spaced apart at preset intervals, and the battery cell 20 is inserted into the interval between the plurality of pressure portions 320. And, as shown in FIG. 5, the pressure portion 320 pressurizes the center 22 of the battery cell 20.

The battery cell 20 may be inserted into the interval between the plurality of pressure portions 320 in a force-fitting manner so that the pressure portion 320 may pressurize the center 22 of the battery cell 20. In this way, when inserted in a force-fitting manner, the pressure portions 320 may sufficiently pressurize the battery cell 20, and the impregnation by the electrolyte in the center 22 of the battery cell 20 may be smoothly performed.

The pressure portion 320 may be formed in various shapes, and may be formed in a planar plate shape to contact the battery cell 20 and pressurize the battery cell 20. However, the shape of the pressure portion 320 may be more diverse.

And, if the end of the pressure portion 320 is sharp, the battery cell 20 may be damaged when inserted between the pressure portions 320, and thus referring to FIG. 7, rounded parts 321 may be formed on the plurality of pressure portions 320 to prevent this and facilitate the insertion of the battery cell 20.

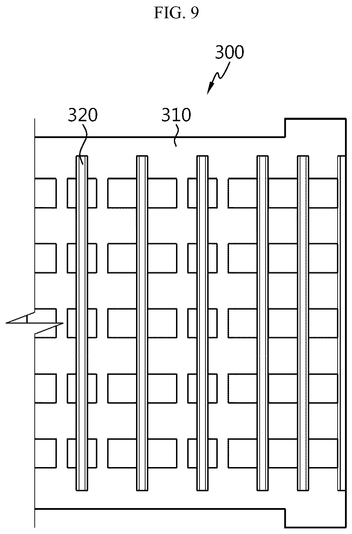

FIG. 9 is a view of a modified embodiment for an embodiment of the present disclosure, showing a state in which an interval between a plurality of pressure portions of the pressure member is adjusted.

Referring to FIG. 9, the plurality of pressure portions 320 may be configured such that the interval between the plurality of pressure portions 320 is adjusted. For example, the plurality of pressure portions 320 may be configured to be movable in a direction of being closer to or away from each other.

That is, the battery cell 20 may be inserted between the plurality of pressure portions 320 by widening the interval between the plurality of pressure portions 320, and then the interval between the plurality of pressure portions 320 may be narrowed. By doing so, the insertion of the battery cell 20 between the plurality of pressure portions 320 is facilitated, and the center 22 of the battery cell 20 may be sufficiently pressurized by narrowing the interval between the plurality of pressure portions 320.

Here, the method of adjusting the interval between the plurality of pressure portions 320 may vary. For example, the operator may manually grip the pressure portions 320 and then move the pressure portions 320, or they may be provided to be connected to a motor or the like and move along a guide (e.g., an LM guide).

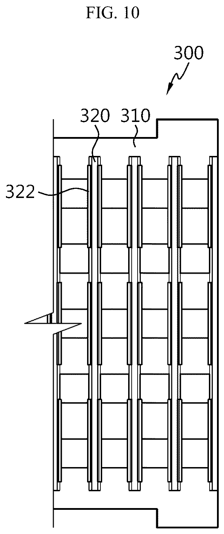

FIG. 10 is a view of another modified embodiment for an embodiment of the present disclosure, showing a state in which a plurality of protrusions are formed on the pressure portions of the pressure member.

Referring to FIG. 10, a plurality of protrusions 322 may be formed on at least one of the plurality of pressure portions 320. The protrusions 322 formed on the pressure portions 320 may pressurize the battery cell 20 more easily, and the degree of pressurization may also be adjusted by forming larger or more protrusions 322 in a part of the battery cell 20 that requires more pressurization for impregnation.

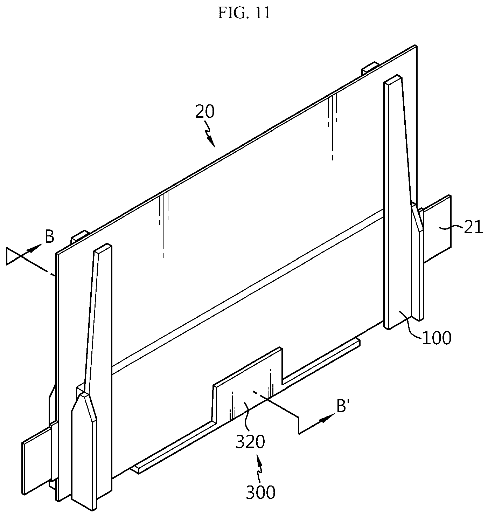

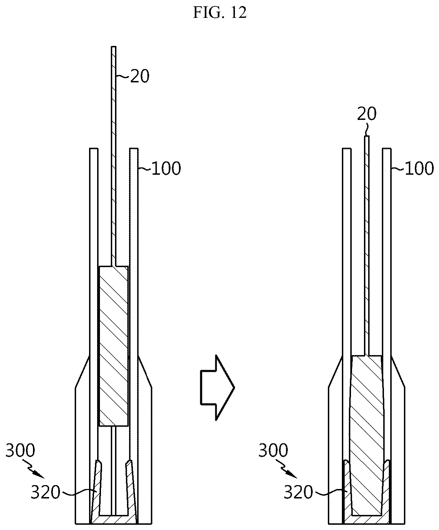

FIG. 11 is a view of still another modified embodiment for an embodiment of the present disclosure, and FIG. 12 is a cross-sectional view taken along line B-B' of FIG. 11, showing a process in which a battery cell is inserted into a plurality of elastic pressure portions.

Referring to FIGS. 11 and 12, the plurality of pressure portions 320 may be configured to be elastic. To this end, the plurality of pressure portions 320 may be formed in the form of a leaf spring, but are not limited thereto.

That is, as shown in FIG. 12, when two neighboring pressure portions 320 are spread apart and a battery cell 20 is inserted between the two pressure portions 320, the pressure portions 320 having elasticity may sufficiently pressurize the battery cell 20 by elastic restoring force. However, the pressure portions 320 need not necessarily be formed in the form of a leaf spring, and various modified forms are possible as long as it may have an elastic force.

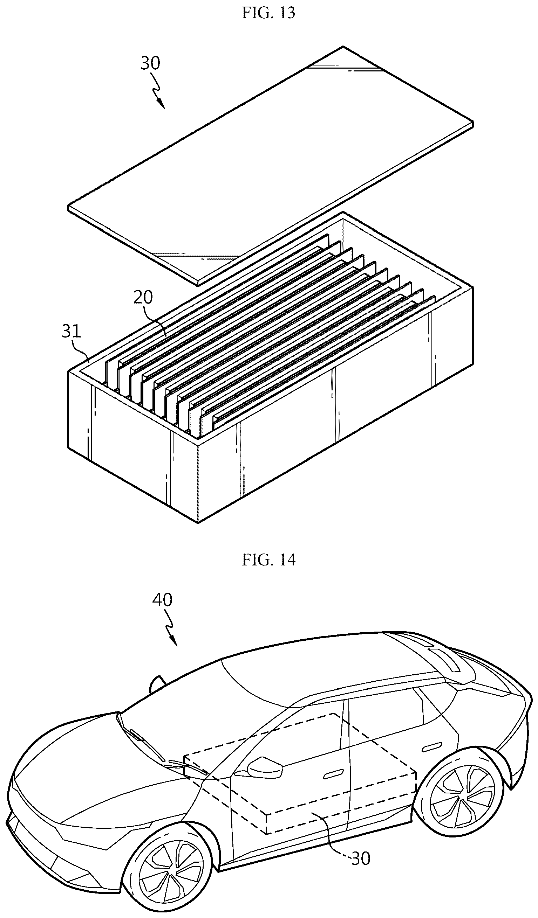

FIG. 13 is a view schematically showing the configuration of a battery pack including battery cells produced using a battery cell activation tray according to each embodiment of the present disclosure.

Referring to FIG. 13, a battery pack 30 according to an embodiment of the present disclosure may include one or more battery cells 20. Here, the battery cells 20 are produced using the battery cell activation tray 10 according to each embodiment of the present disclosure as described above.

Additionally, the battery pack 30 may further include a pack housing 31 for accommodating the battery cells 20, and various devices for controlling the charging and discharging of the battery cells 20, such as a BMS, a current sensor, a fuse, and the like.

Referring to FIG. 13, the battery cells 20 are directly accommodated inside the pack housing 31, but it is also possible that the battery cells 20 are accommodated in a module case, and the module case (battery module) in which the battery cells 20 are accommodated are accommodated in the pack housing 31.

FIG. 14 is a view for describing a vehicle including a battery pack according to each embodiment of the present disclosure.

Referring to FIG. 14, a vehicle 40 according to an embodiment of the present disclosure may include one or more battery packs 30 according to each embodiment described above. And, the battery pack 30 may include one or more battery cells 20 as described above.

Here, the battery cells 20 are produced using the battery cell activation tray 10 according to each embodiment of the present disclosure as described above.

The vehicle 40 may include various vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those having ordinary skill in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a battery cell activation tray and a battery cell produced using the same, and a battery pack and a vehicle including the battery cell, and is particularly applicable to industries related to secondary batteries.

## Claims

1. A battery cell activation tray where battery cells are seated and an activation process is performed, the battery cell activation tray comprising:
a pair of inner frames each supporting both ends of the battery cell;
an outer frame to which the inner frames are coupled; and
a pressure member disposed between the pair of inner frames and pressurizing a center of the battery cell.

2. The battery cell activation tray according to claim 1,
wherein the pressure member comprises:
a bottom portion coupled to the outer frame; and
a plurality of pressure portions coupled to the bottom portion.

3. The battery cell activation tray according to claim 2,
wherein the plurality of pressure portions are spaced apart at preset intervals, and
the battery cell is inserted into the interval between the plurality of pressure portions.

4. The battery cell activation tray according to claim 3,
wherein the battery cell is inserted into the interval between the plurality of pressure portions in a force-fitting manner.

5. The battery cell activation tray according to claim 2,
wherein the pressure portion is formed in a planar plate shape.

6. The battery cell activation tray according to claim 2,
wherein the plurality of pressure portions are elastic.

7. The battery cell activation tray according to claim 6,
wherein the plurality of pressure portions are formed in the form of a leaf spring.

8. The battery cell activation tray according to claim 2,
wherein a plurality of protrusions are formed on at least one of the plurality of pressure portions.

9. The battery cell activation tray according to claim 2,
wherein the plurality of pressure portions are configured to be movable in a direction of being closer to or away from each other to allow the interval between the plurality of pressure portions to be adjusted.

10. The battery cell activation tray according to claim 2,
wherein rounded parts are formed in the plurality of pressure portions to facilitate the insertion of the battery cell.

11. The battery cell activation tray according to claim 2,
wherein a rib portion for being fixed to the outer frame by a fastening member is formed on the bottom portion.

12. The battery cell activation tray according to claim 2,
wherein a plurality of through holes are formed in the bottom portion.

13. A battery cell produced using a battery cell activation tray according to any one of claims 1 to 12.

14. A battery pack comprising at least one battery cell according to claim 13.

15. A vehicle comprising at least one battery cell according to claim 13.
